# EUROPÄISCHE PATENTSCHRIFT

(11) **EP 1 490 620 B1**
(45) Veröffentlichungstag und Bekanntmachung des Hinweises auf die Patenterteilung: **28.11.2007**
(21) Anmeldenummer: 03709788.8
(22) Anmeldetag: 14.03.2003
(51) Int. Cl.: F16L 33/22

(54) **VERBINDUNGSSTÜCK FÜR EIN ROHRLEITUNGSNETZ**
CONNECTING PIECE FOR A PIPING SYSTEM
RACCORD DESTINE A UN RESEAU DE TUYAUTERIE

(30) Priorität: 28.03.2002 DE 10214682
(43) Veröffentlichungstag der Anmeldung: 29.12.2004
(73) Patentinhaber: GARDENA Manufacturing GmbH, 89079 Ulm (DE)
(72) Erfinder: SCHIEDT, Christoph, 88483 Burgrieden (DE)
(74) Vertreter: Patentanwälte Ruff, Wilhelm, Beier, Dauster & Partner
(86) Internationale Anmeldenummer: PCT/EP2003/002666
(87) Internationale Veröffentlichungsnummer: WO 2003/083345

(56) Entgegenhaltungen:
- EP-A- 0 728 980
- DE-A- 2 158 816
- DE-C- 912 283
- GB-A- 248 162
- US-A- 3 402 947

## Beschreibung

Die Erfindung betrifft ein Verbindungsstück für ein Rohrleitungsnetz, insbesondere für ein Bewässerungssystem für Pflanzen, sowie eine Befestigungsanordnung für solche Verbindungsstücke, um diese an einer Befestigungsfläche zu halten. Dokument GB 248, 162 A zeigt ein Verbindungsstück nach dem Oberbegriff von Anspruch 1.

Bewässerungssysteme mit einem Rohrleitungssystem sind bekannt (Gardena Micro-Drip-System). Bei dieser bekannten Anordnung sind Kunststoffleitungen von einer Wasserquelle aus zu Abzweigungen und Endverbrauchern gelegt, wobei über das Rohr greifende Halter mit Erdspießen die Rohre am Boden fixiert halten können. Zu diesem Zweck weisen die Halter am oberen Ende eines Erdspießes einen teiloffenen Ring auf, in welchen das Rohr eingeklipst werden kann. Bei der bekannten Anordnung sind auch Rohrhalter in der Form von Rohrklemmen vorgesehen, die das Rohr von oben umgreifen und auf festem Untergrund durch Dübel, Schrauben, Nägel oder dergleichen befestigt werden können.

Solche Befestigungsanordnungen sind nur geeignet, um gerade Rohrleitungsstücke ortsfest zu halten. Die Anordnung und Halterung von Verteilstücken oder von Abzweigungen zu Endverbrauchern ist nicht möglich. Es hat sich auch gezeigt, dass die Kunststoffleitungen zumindest nach einer gewissen Einbauzeit dazu neigen, sich von dem Anschlussstutzen der Verbindungsstücke zu lösen.

Der Erfindung liegt die Aufgabe zugrunde, für Verbindungsstücke eine Ausgestaltung vorzuschlagen, mit der in einfacher Weise eine Sicherung der Anschlussleitungen an den Verbindungsstücken möglich ist.

Zur Lösung dieser Aufgabe werden ein Verbindungsstück nach Anspruch 1 sowie eine Befestigungsanordnung nach Anspruch 12 vorgeschlagen.

Es sind zwar Sicherungseinrichtungen für Rohrleitungen bekannt (US-A-4 541 658). Die bekannten Sicherungen bestehen aber mehr oder weniger aus Rasthaken, die beim Einschieben eines Rohrleitungsendes radial zur Seite gedrückt werden und dann hinter einem Sicherungskragen der Rohrleitungsstücke einschnappen. Die Sicherung nach der vorliegenden Erfindung dagegen besteht aus Schneiden, die außen die Rohrleitungen übergreifen und ein Zurückziehen derselben aus ihrer aufgeschobenen Position unterbinden. Vorteil der Anordnung solcher Schneiden außen an den Rohrleitungen ist es, dass diese Schneiden über ihre Hebelarme von Hand abgehoben werden können, so dass eine Demontage der Rohrleitungen möglich wird.

Diese Schneiden und Hebelarme können Teil der Verbindungsstücke selbst sein. Sie können aber zweckmäßig auch als Zusatzteile ausgebildet und gesondert auf die Anschlussstutzen aufgesetzt sein. Diese Ausgestaltung erlaubt beispielsweise die Herstellung aus einem elastischen und zähen Material, beispielsweise aus geeigneten Kunststoffen, welches sich von dem Material zur Herstellung der Verbindungsstücke selbst unterscheiden kann.

In zweckmäßiger Ausgestaltung bilden die Schneiden und die Hebelarme jeweils einen Ringkörper, der auf den Anschlussstutzen aufgeschoben und an diesem formschlüssig gehalten ist. Dabei kann bei einer besonders vorteilhaften Ausführungsform der Ringkörper aus zwei gegenüberliegenden Halbringen mit je einer Schneide und mit schräg zu einer Mittelebene hin verlaufenden Hebelarmen bestehen, die in gegenüberliegende um 90° gegenüber den Schneiden versetzte Rastlaschen übergehen, die formschlüssig in Aussparungen der Anschlussstutzen eingreifen.

Möglich ist es aber auch, den Ringkörper aus Federblech zu stanzen, mit einer an seinem Innendurchmesser vorgesehenen Sicherungskante federnd außen an der Rohrleitung angreifen zu lassen und mit seinen der Sicherungskante gegenüberliegenden Innenseite an einem Sicherungsvorsprung des Anschlussstutzens zu halten. In anderer Ausführung können Schneide und Hebelarme Teile eines U-förmigen Sicherungsbügels sein, welcher mit seiner offenen Seite seitlich auf den Anschlussstutzen aufgesetzt sein kann.

Dabei kann die Sicherungskante gezackt ausgebildet sein und an dem der Sicherungskante gegenüberliegenden Innenumfang des Federblechringes eine Aussparung vorgesehen sein, die an einem hakenförmigen Vorsprung des Anschlussstutzens eingehängt ist.

Die Erfindung ist anhand von Ausführungsbeispielen in der Zeichnung dargestellt und wird im folgenden erläutert. Es zeigen:
- Fig. 1: eine perspektivische schematische Darstellung eines Rohrleitungsnetzes eines Bewässerungssystems,
- Fig. 2: die vergrößerte Darstellung einer Seitenansicht einer zur Befestigung von Rohrleitungen vorgesehenen Klaue, die mit einem Einsteckspieß zur Befestigung in der Erde versehen ist,
- Fig. 3: die Ansicht der Befestigungsklaue nach Fig. 2 in Richtung des Pfeiles III gesehen,
- Fig. 4: die Draufsicht auf die Klaue der Fig. 2 in Richtung des Pfeiles IV gesehen,
- Fig. 5: die Ansicht der Klaue der Fig. 2 von unten in Richtung des Pfeiles V nach Fig. 2 gesehen,
- Fig. 6: eine Befestigungsklaue anderer Art mit einer seitlich von ihr abragenden Befestigungslasche in einer Darstellung ähnlich Fig. 2,
- Fig. 7: die Ansicht der Klaue der Fig. 6 in Richtung des Pfeiles VII gesehen,
- Fig. 8: den Schnitt durch die Klaue längs der Schnittlinie VIII-VIII in Fig. 7,
- Fig. 9: die Ansicht der Klaue der Fig. 6 in Richtung des Pfeiles IX gesehen,
- Fig. 10: die Draufsicht auf die Klaue nach Fig. 6 in Richtung des Pfeiles X gesehen,
- Fig. 11: eine perspektivische Darstellung der Klaue nach den Fig. 6 bis 10,
- Fig. 12: ein Verbindungsstück für Rohrleitungen, welches in den Klauen nach Fig. 1 bis 5 bzw. 6 bis 11 rastend aufgenommen werden kann,
- Fig. 13: eine Variante eines Verbindungsstückes,
- Fig. 14: ein Verschlussstück,
- Fig. 15: ein T-Verbindungsstück für Rohrleitungen, das in den Klauen nach den vorher gezeigten Fig. aufnehmbar ist,
- Fig. 16: ein kreuzförmiges Verbindungsstück, das ebenso wie die Verbindungsstücke nach den Fig. 12 bis 15 mit einer Anordnung zur Sicherung eines aufgeschobenen Rohrleitungsendes an jedem Anschlussstutzen versehen ist,
- Fig. 17: ein Winkelverbindungsstück,
- Fig. 18: das Winkelverbindungsstück nach Fig. 17 in einer anderer Darstellung,
- Fig. 19: ein Winkelverbindungsstück ähnlich Fig. 18, jedoch mit einer einstückig integrierten Sicherungseinrichtung für aufgeschobene Rohrstücke,
- Fig. 20: eine andere Ausführungsform einer Sicherungseinrichtung für aufgeschobene Rohrstücke mit einem blattfederartig ausgebildeten Sicherungsring,
- Fig. 21: die Draufsicht auf die Ausführungsform der Fig. 20 in Richtung des Pfeiles XXI,
- Fig. 22: die Darstellung des als Sicherungseinrichtung verwendeten Blattfederringes der Fig. 20 und 21,
- Fig. 23: die Seitenansicht eines weiteren Ausführungsbeispiels eines Verbindungsstücks mit einer Sicherungsanordnung für aufgeschobene Rohrleitungen,
- Fig. 24: die Teilansicht des Verbindungsstücks der Fig. 23 in Richtung des Pfeiles XXIV,
- Fig. 25: die Ansicht des als Sicherungsanordnung in Fig. 23 vorgesehenen Federbügels in Richtung des Pfeiles XXV der Fig. 26,
- Fig. 26: die Seitenansicht des Sicherungsbügels der Fig. 23 ohne Verbindungsstück,
- Fig. 27: die Ansicht des Sicherungsbügels in Richtung des Pfeiles XXVII der Fig. 26,
- Fig. 28: die Ansicht des Sicherungsbügels der Fig. 26 in Richtung des Pfeiles XXVIII und
- Fig. 29: die Ansicht des Sicherungsbügels der Fig. 26 in Richtung des Pfeiles IXXX.

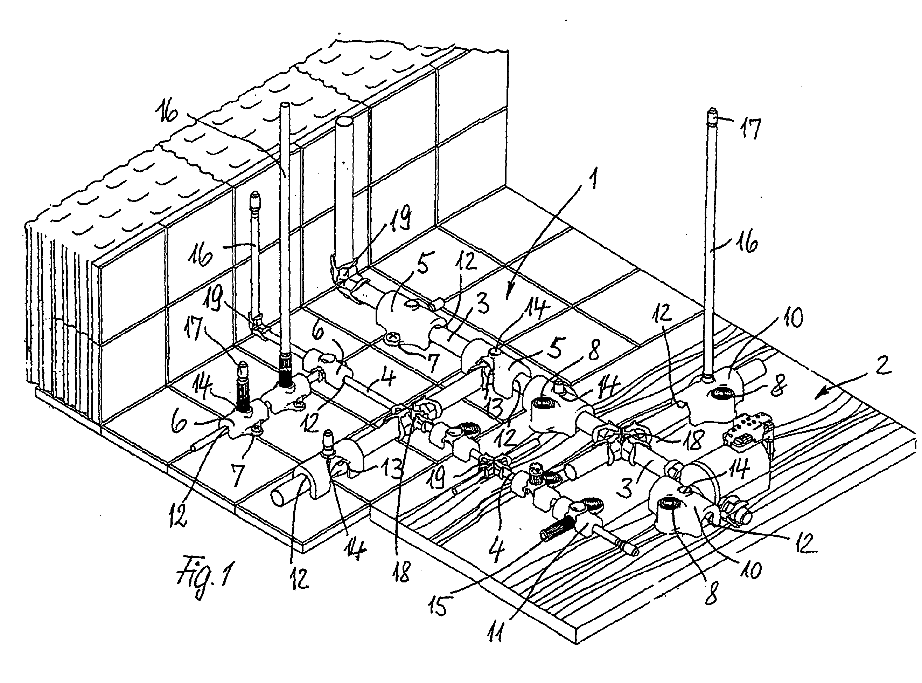

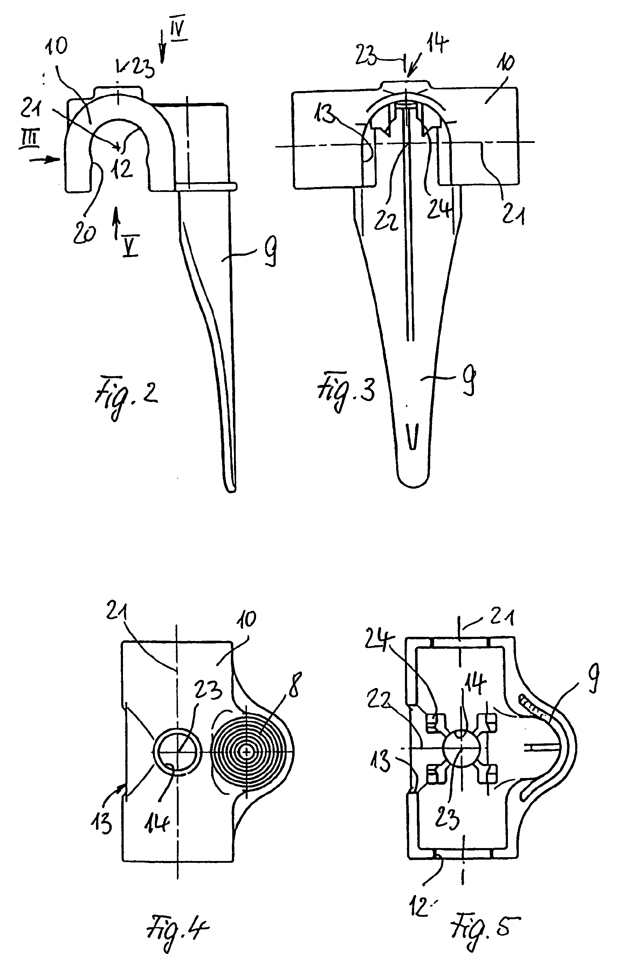

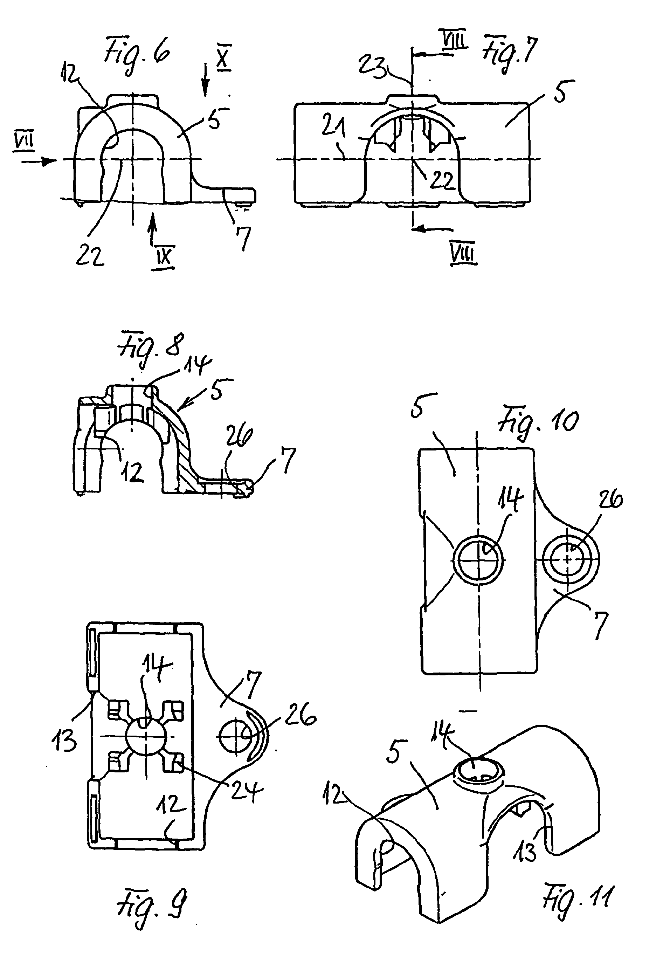

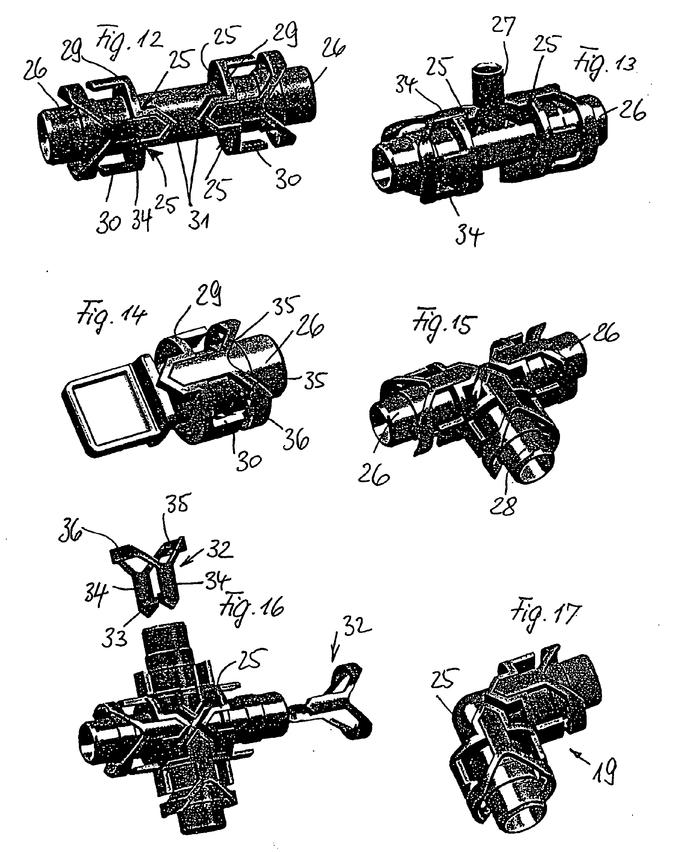

Die Fig. 1 zeigt mehr oder weniger schematisch eine Befestigungsanordnung für ein Gartenbewässerungssystem, wobei keine konkrete Bewässerungsanlage gezeigt ist, sondern nur die Möglichkeiten der Rohrleitungsverlegung und der Anordnung zusätzlicher Elemente, die durch die Erfindung möglich ist.

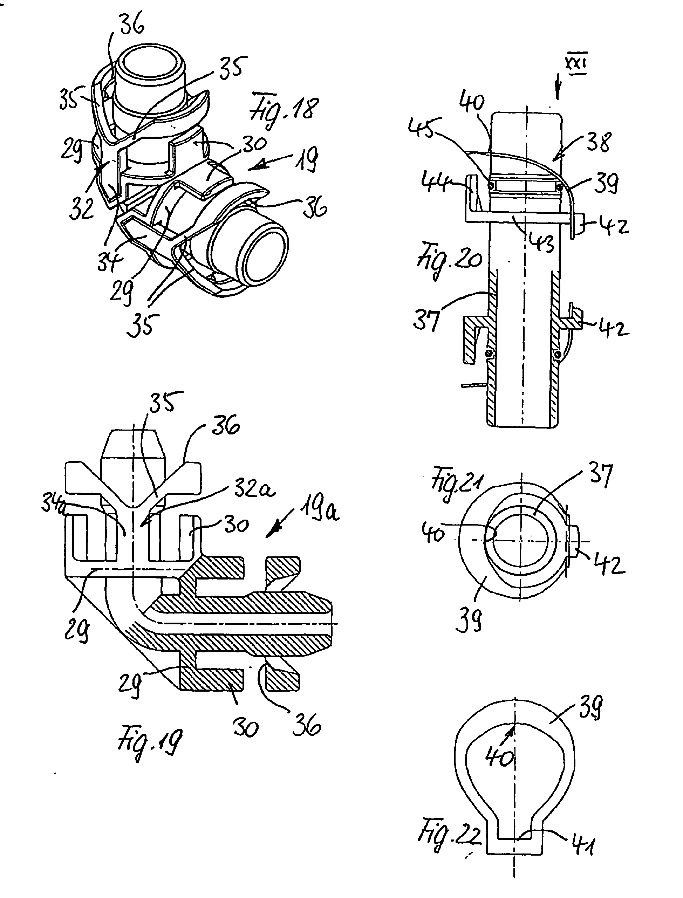

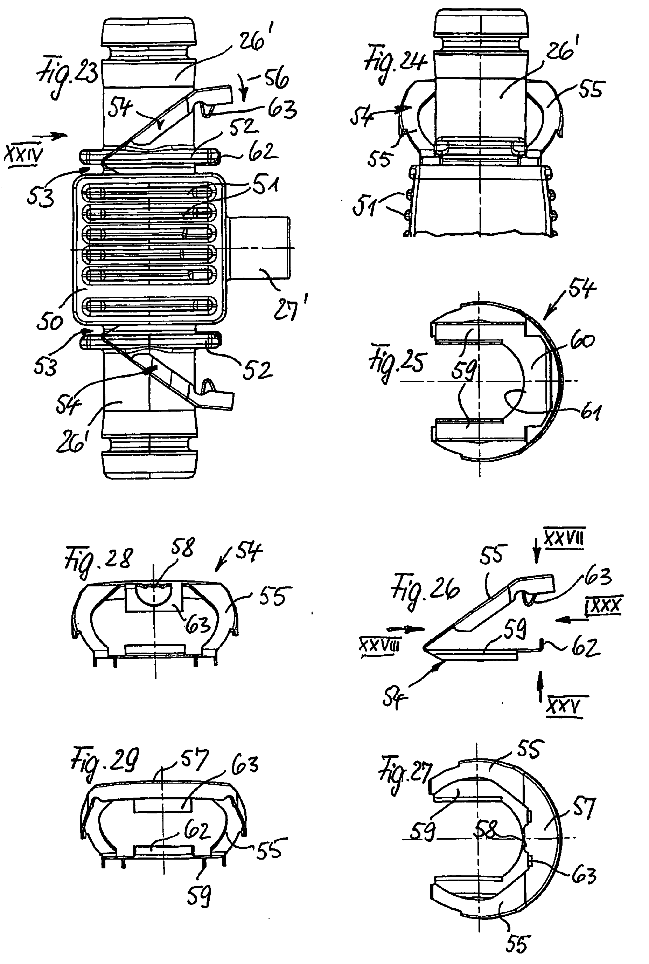

Fig. 1 zeigt schematisch einen Gartenbereich 1 mit festem Boden, beispielsweise den Bereich einer Terrasse und einen Gartenbereich 2, der vom natürlichen Erdboden begrenzt ist. Im ersten Bereich 1 sind zur Befestigung von Rohrleitungen 3 bzw. 4 Klauen 5 bzw. 6 vorgesehen, die unterschiedliche Abmessungen aufweisen. Die tunnelartig ausgebildeten Klauen 5 bzw. 6 besitzen unterschiedliche Durchgangsöffnungen, die sich an Rohrleitungen 3 mit größerem Durchmesser, beispielsweise an ½ Zollrohre bzw. an dünnere Kunststoffrohre, beispielsweise 3/16 Zoll im Durchmesser, anpassen. Diese Kunststoffrohre werden dabei in später noch näher zu erläuternder Weise in entsprechende Ausnehmungen an den Durchgangsöffnungen der Klauen 5 bzw. 6 eingerastet und so in ihrer Lage gehalten. Die Klauen 5 bzw. 6 sind Befestigungsklauen, die mit seitlich abstehenden Befestigungslaschen 7 versehen sind, wobei durch diese Laschen 7 Schrauben oder dergleichen zur Befestigung der Klauen am Boden des Bereiches 1 geführt werden können. Klauen dieser Art sind in den Fig. 6 bis 11 im einzelnen beschrieben. Befestigungsklauen 10 mit Druckplatten 8 und mit nach unten ragenden Erdspießen 9 sind im Bereich 2 zur Befestigung der Rohrleitungen 3 bzw. 4 vorgesehen und werden im einzelnen anhand der Fig. 2 bis 5 erläutert. Zu erkennen ist in Fig. 1, dass beide Arten von Befestigungsklauen 5, 6 bzw. 10, 11, die jeweils für Rohrleitungen 3, 4 unterschiedlicher Durchmesser einsetzbar sind, außer den Durchgangsöffnungen 12 für die Rohrleitungen 3 bzw. 4 auch noch mit zusätzlichen Öffnungen 13 und 14 versehen sind, die dazu ausgenützt werden können, entweder wiederum Rohrleitungen 3 bzw. 4 senkrecht zum ersten Rohrleitungsverlauf in einer zum Boden parallelen Befestigungsebene zu verlegen oder andere Elemente, wie beispielsweise Tropfausgänge 15 anzuschließen oder über die senkrecht zur Befestigung stehenden Öffnungen 14 nach oben gerichtete Austrittsrohre 16 zur Befestigung von Sprühdüsen 17 anzubringen. Auch hierauf wird im folgenden noch eingegangen werden.

Zu erkennen sind in Fig. 1 aber auch Verteilerstücke 18 und 19, ebenfalls angepasst an die Durchmesser der Rohrleitungen 3 bzw 4, die zum Anschluss verschiedener Rohrleitungen dienen und ebenfalls unterhalb der Klauen 5 bzw. 6 in einer Befestigungsebene gehalten werden können. Solche Verbindungsstücke sind in den Fig. 12 bis 17 aufgeführt.

Sie sind außerdem mit Sicherungsanordnungen versehen, mit denen die aufgeschobenen Rohrleitungen an einem Abrutschen gehindert werden können. Die nachfolgende Beschreibung enthält auch hierzu Erläuterungen.

Die Fig. 2 bis 5 zeigen in einer vergrößerten Darstellung die Klauen 10, die im Erdbereich 2 zur Befestigung von Rohrleitungen verwendet werden. Die Klauen 11 entsprechen im wesentlichen der Ausgestaltung der Klauen 10. Lediglich die Abmessungen sind anders, um eine Anpassung an Rohrleitungen von 3/16 Zoll zu erreichen, während die gezeigten Klauen 10 beispielsweise für Halbzoll-Rohrleitungen geeignet sein sollen. Die Fig. 2 bis 5 lassen zunächst erkennen, dass die Klauen 10 selbst etwa in der Form eines Tunnels ausgebildet sind, wobei die Austrittsöffnungen 12 jeweils mit nach innen ragenden Vorsprüngen 20 versehen sind, die beim Einlegen der Rohrleitungen 3 zu einem Einrasten derselben in der Öffnung 12 führen. Die Klauen 10 sind ebenso wie die Rohrleitungen 3 oder 4 aus Kunststoff hergestellt, aus einem Material also, das eine gewisse elastische Verformung zulässt, um die jeweiligen Leitungen 3 - bzw. 4 - in den Öffnungen 12 formschlüssig zu lassen.

Die Fig. 3 und 5 zeigen aber auch, dass die Klauen 10 mit senkrecht zu der Achse 21 verlaufenden Öffnungen 13 bzw. 14 versehen sind, von denen die Öffnung 13 ebenfalls tunnelartig, die Öffnung 14 dagegen als eine kreisrunde Öffnung ausgebildet ist. Die Achse 21 verläuft dabei durch den Mittelpunkt des Kreisbogens, den die Öffnung 12 im oberen geschlossenen Bereich bildet. Die Achse 21 verläuft somit auch in der Befestigungsebene der Leitungen 3 (bzw. 4), weil die Rohrleitungen im kreisbogenförmigen Teil der Öffnung 12 entsprechend gehalten werden. Die Öffnung 13 liegt auf einer Achse 22, die senkrecht zur Achse 21 verläuft und in der von der Lage der Achse 21 bestimmten Befestigungsebene liegt. Die Öffnung 14 dagegen liegt auf einer Achse 23, die senkrecht zur Befestigungsebene verläuft.

Die Öffnung 13 besitzt keine Möglichkeit, um Rohre einrasten zu können. Die Innenseite der Klauen 10 ist jedoch im Bereich des Schnittpunktes der Achse 21 mit den Achsen 22 und 23 mit nach innen ragenden Strukturen 24 in der Form von Vorsprüngen, die symmetrisch zu der Achse 23 angeordnet sind, versehen. Wie später noch erläutert werden wird, dienen diese Strukturen dazu, formschlüssig in entsprechende Ausnehmungen oder Aussparungen 25 der Verbindungsstücke 18 einzugreifen, um diese positionsgenau innerhalb der Klauen 10 zu halten. Abzweigungen in der Form von Anschlussstutzen, wie sie noch anhand der Fig. 12 bis 17 beschrieben werden, werden daher sicher in der Öffnung 13 positionierbar. Die Öffnung 14 kann von vorneherein dem Durchmesser der Rohrleitungen 3 bzw. 4 angepasst werden, so dass entsprechende Stutzen eines Verteilerstückes oder andere Anschlussrohrteile wie jene, die in Fig. 1 mit 16 bezeichnet sind, sicher und fest in ihrer senkrechten Lage zur Befestigungsebene an den Klauen 10 gehalten werden können.

Die Fig. 6 bis 11 zeigen die Klauen 5, die zur Befestigung der Rohrleitungen auf festem Boden geeignet ausgebildet sind. Hier ist zum einen wiederum die Einrastöffnung 12 jeder Klaue 5 zu erkennen, die zur Achse 21 ausgerichtet ist. Diese Klauen 5 werden mit Hilfe der Laschen 7 am Boden befestigt, die Öffnungen 26 zum Durchführen von Schrauben, Nägeln oder dergleichen aufweisen. Für diese Laschen 5 gilt das gleiche, wie schon anhand der Fig. 2 bis 5 zu den Laschen 10 ausgeführt. Anders ist ausschließlich die Art der Befestigung der Klauen 5 am Untergrund.

Zu den Klauen 5 bzw. 10 kann grundsätzlich auch noch bemerkt werden, dass die tunnelartigen Gehäuse der Klauen innen Platz für verschiedene Kupplungskomponenten aufweisen. Zum einen können Verbindungsstücke aufgenommen werden, wie sie noch anhand der Fig. 12 bis 17 erläutert werden. Es kann beispielsweise ein T-Stück nach Fig. 15 zur Verbindung von drei Rohrenden unter einer solchen Klaue gehalten werden. Die innen vorgesehenen Strukturen 24 sind dann von Bedeutung, wenn an dem zusätzlichen Ausgang 13, wo keine Rastung vorgesehen ist, auch andere Elemente aus dem Gehäuse der Klaue herausragen können. In einem solchen Fall dienen die korrespondierenden Strukturen 24 zur Stabilisierung der Position der Verbindung innerhalb der Klaue. Dies ist dann wichtig, wenn die Rohrverbindung eine Querschnittsreduzierung von einem Standardmaß von einem halben Zoll auf das weitere Standardmaß 3/16 Zoll aufweist und der für Halbzollrohre ausgelegte Klauenhalter das 3/16 Zollrohr bzw. dessen Verbindungsabschnitt nicht eng umgreift. In diesem Fall fixieren die korrespondierenden Strukturen 24, 25 trotzdem die Lage des dünneren Rohrabschnittes innerhalb der Klaue. An den horizontalen Abschnitt kann auch bereits ein Tropfer oder dergleichen angeschlossen sein.

Der senkrecht zur Befestigungsfläche weisende zusätzliche Ausgang 14 ist deshalb besonders vorteilhaft, weil über ihn die geläufigen Tropfer, insbesondere aber auch Sprühdüsen wie beispielsweise die Düse 17 am Rohr 16 (Fig. 1) angeschlossen werden können. Dieses Verlängerungsrohr 16 ist kippsicher innerhalb der Öffnung 14 angeordnet.

Die Fig. 12 bis 17 zeigen nun Verbindungsstücke für die Kunststoffrohrleitungen. Diese Verbindungsstücke bzw. ihre Anschlussstutzen 26, 27, 28 sind jeweils auf die Abmessungen der Kunststoffrohrleitungen 3 bzw. 4 abgestimmt. Die Verbindungsstücke sind, worauf noch näher eingegangen werden wird, jeweils mit umlaufenden und profilierten Kragen 29 versehen, die jeweils mit axial abstehenden Ansätzen 30 und bei den gezeigten Ausführungsbeispielen auch mit pfeilartig zur Verbindungsmitte axial verlaufenden Absätzen 31 versehen sind, welche nach innen weisende Vertiefungen aufweisen, die dazu ausgenützt werden können, Sicherungseinrichtungen 32 mit ihren nach innen gerichteten Haken 33 (Fig. 16) einrasten zu lassen. Die Fig. 19 zeigt demgegenüber eine andere Ausführungsform, bei der eine Sicherungseinrichtung 32a einteilig an das Verbindungsstück 19a angesetzt ist. Auch hier sind axial abstehende Anschlagvorsprünge 30 vorgesehen, es fehlt jedoch die zweiteilige Ausbildung zwischen Sicherheitseinrichtung 32 und Verbinder 19, wie das in Fig. 18 gezeigt ist.

Die Sicherheitseinrichtung 32 besteht aus zwei diametral gegenüberliegenden Haltearmen 34, von denen aus jeweils Hebelarme 35 schräg zu je einer Schneide 36 verlaufen, die jeweils kreisbogenförmig ausgebildet ist und in ihrem Radius dem Radius der auf die Anschlussstutzen 26 oder 28 aufzuschiebenden Kunststoffleitungen angepasst ist. Da die Hebelarme 35 schräg nach außen entgegengesetzt zur späteren Aufschieberichtung eines Leitungsendes verlaufen, werden die jeweils zugeordneten Schneiden 36 beim Aufschieben eines Rohrendes radial nach außen gedrückt, so dass dem Aufschieben des Leitungsendes kein Widerstand entgegengesetzt wird.

Wird dagegen das Rohrleitungsende, an dem sich die Schneide außen elastisch anlegt, vom Verbindungsstück weg nach außen abgezogen, so drückt sich die Schneide aufgrund des innenliegenden Schwenkpunktes der Hebelarme 35 radial nach innen und außen in die Kunststoffleitung herein, so dass ein Abziehen der Leitung nicht möglich ist. Dies wird erst möglich, wenn die Schneiden 36 von Hand nach außen gedrückt werden und dann der Abziehvorgang eingeleitet wird. Dabei ist die Ausgestaltung so getroffen, dass die vom Benutzer aufzubringende Lösekraft bei der manuellen Verlagerung der Schneide vom Umfang des aufgesteckten Rohres nicht viel größer als oder ungefähr so groß wie die Kraft zum Aufschieben eines Rohres ist. Der Benutzer kann die Sicherung daher ohne Zuhilfenahme eines Werkzeuges lösen. Eine Beschädigung der Sicherheitsanordnung ist nicht zu befürchten.

Die Sicherheitseinrichtung 32, die bei den in den Fig. 12 bis 17 gezeigten Ausführungsbeispielen jeweils getrennt vom Verbindungsstück angefertigt und dann im Sinn von Fig. 16 auf das Verbindungsstück aufgeschoben und verrastet wird, verhindert daher sicher ein ungewolltes Ablösen der Rohrleitungen vom Verbinder. Die Geometrie der Schneidenanordnung ist zu diesem Zweck so ausgelegt, dass sich die Haltekraft verstärkt, wenn eine abziehende Kraft auf eine Rohrleitung ausgeübt wird. Es wird dann auf den die Schneide führenden Hebelarm und auf die Schneide selbst ein Moment ausgeübt, das einen stärkeren Eingriff der Schneide in den Rohrmantel und damit eine höhere Haltekraft bewirkt.

Die Verbinder selber werden, wie vorher ausgeführt, im Hohlraum innerhalb der Klauen 5 bzw. 10 sicher gehalten und positioniert. Die neuen Befestigungsklauen 5 bzw. 10 sichern daher den stabilen und sicheren Aufbau eines Rohrleitungsnetzes zu.

In Fig. 19 ist die Ausgestaltung der Sicherheitseinrichtung bezüglich ihrer Funktion nicht anders als jene der Sicherheitseinrichtung 32. Auch hier ist die Schneide 36 jeweils am Ende von Hebelarmen 35 angeordnet. Unterschiedlich ist lediglich, dass die Verbindungsarme 34a fest an dem Kragen 29 ansetzen und nicht als getrennt aufschnappbare Teile ausgebildet sind.

Die Fig. 12 bis 17 lassen auch die vielseitigen Möglichkeiten erkennen, wie Verbindungsstücke ausgebildet werden können. Die Fig. 12 zeigt dabei ein einfaches Durchgangsverbindungsstück. Fig. 13 ein Durchgangsverbindungsstück mit einem senkrecht abragenden Anschlussstutzen 27, der durch die Öffnung 14 der zugeordneten Klaue geführt werden kann. Fig. 14 zeigt ein Endverbindungsstück mit einem Abschluss. Fig. 15 ein T-Stück. Fig. 17 ein Winkelanschlussstück und Fig. 16 einen Kreuzverbinder. Es wird erkennbar, dass ein solcher Kreuzverbinder bei den hier gezeigten Klauen 5 oder 10 nicht einsetzbar ist, weil der vierte Anschlussstutzen entweder mit dem Erdspieß 9 oder mit der Lasche 7 kollidieren würde. Es ist jedoch durchaus denkbar, Befestigungsklauen so auszubilden, dass auch Kreuzstücke untergebracht werden können. Zu diesem Zweck müsste die Lasche 7 aus der Ebene der Achse 22 entfernt und nach außen gesetzt werden. Gleiches gilt für die Anordnung eines Erdspießes.

Die Fig. 20 bis 22 schließlich zeigen einen Anschlussstutzen 38 eines im übrigen nicht näher gezeigten Verbindungsstücks 37. Hier ist eine andere Art einer Sicherungsanordnung für ein aufgeschobenes Leitungsstück vorgesehen. Die Sicherungseinrichtung besteht hier aus einem in besonderer Weise ausgestanzten Stahlblechring 39, wie er in Fig. 22 gezeigt ist. Der Stahlblechring 39 weist an seinem Innenumfang eine gezackte Sicherungskante 40 und auf der dieser Sicherungskante 40 gegenüberliegenden Seite eine Ausnehmung 41 auf. Mit dieser Ausnehmung 41 wird der Sicherungsring über einen seitlich abragenden hakenartigen Vorsprung 42 des Verbindungsstückes 37 gehängt und dabei, wie Fig. 20 zeigt, so federnd gebogen, dass seine Sicherungskante 40 sich außen am Umfang des Anschlussstutzens 38 anlegt. Der Haken 42 ist dabei Teil eines Kragens 43, der einen axial abragenden Anschlag 44 aufweist, der dem mit der Sicherungskante 40 versehenen Teil des Ringes 39 in dessen Montagelage gegenüberliegt.

Soll nun ein Rohrende auf das Verbindungsstück 37 aufgeschoben werden, so wird der Sicherungsring 39 von Hand oder durch das Rohr selbst im Bereich seiner Sicherungskante 40 in Richtung des Anschlags 44 gedrückt, so dass zwischen der Sicherungskante 40 und dem Anschlussstutzen 38 genügend Platz zum Aufschieben des Rohrendes besteht. Nach dem Aufschieben des Rohrendes, das auch noch über den Dichtring 45 übergeschoben wird, wird der Sicherungsring 39 losgelassen, so dass seine Sicherungskante 40 sich außen am Umfang des Rohrendes anlegt. Jeder Zug in Achsrichtung auf das Rohr bewirkt nun, dass sich die Schneide 40 am Außenumfang des Rohres eingräbt und so das Rohrende am Anschlussstutzen 38 sichert. Ein Lösen ist nur möglich, wenn der mit der Schneide 40 versehene Teil wieder, wie vorher schon geschildert, in Richtung des Anschlags 44 gedrückt wird.

Die Fig. 23 bis 27 zeigen eine weitere vorteilhafte Ausführungsform eines Verbindungsstücks mit einer Sicherungsanordnung für ein aufgeschobenes Rohrleitungsstück.

Die Fig. 23 lässt hierzu zunächst erkennen, dass Anschlussstutzen 26', die fluchtend zueinander verlaufen, und ein zu diesen Anschlussstutzen senkrecht verlaufender Anschlussstutzen 27' an einem gemeinsamen Mittelteil 50 angeordnet sind, dessen Durchmesser größer als jener der Anschlussstutzen 26' ist und das mit seitlichen Rippen 51 versehen ist, um eine möglichst gute Handhabung zu ermöglichen.

Parallel zu dem Mittelteil 50 verlaufen in geringem Abstand dazu an beiden Anschlussstutzen 26' umlaufende Kragen 52, die zum Mittelteil 50 hin eine Nut 53 begrenzen, die dazu dient, einen federnden Sicherungsbügel 54 aufzunehmen, der im einzelnen in den Fig. 25 bis 29 in verschiedenen Ansichten gezeigt ist.

Der Sicherungsbügel 54 besteht, wie insbesondere Fig. 24 und 27 sowie 28 zu entnehmen ist, aus einem im wesentlichen U-förmig gebogenen, aus Blech gestanzten und gebogenen Sicherungsteil, das aus zwei Schenkeln 55 und einem diese verbindenden Mittelteil 57 (Fig. 27) aufgebaut ist, der auf seiner nach innen gerichteten Seite eine mit Zacken ausgerichtete Schneide 58 aufweist, die, wie auch schon bei den vorher beschriebenen Ausführungsbeispielen, sich in den Umfang eines auf die Anschlussstutzen 26' aufgeschobenen Kunststoffrohres aufgrund der elastischen Eigenschaften der Sicherungseinrichtung 54 hereindrückt und bei einem Zug auf das Kunststoffrohr entgegen der Aufschieberichtung sich aufgrund der Geometrie noch weiter in das Kunststoffrohr einarbeitet. Der aus den Schenkeln 55 und dem Mittelteil 57 bestehende Sicherungsbügel ist unten einstückig mit zwei ebenfalls zu einem U geformten Befestigungsstreifen 59 verbunden, die zusammen mit einem sie verbindenden Querstück 60 eine Art Montageplatte bilden, die mit einer dem Innendurchmesser der Nut 53 angepassten Ausnehmung 61 versehen ist, und mit ihrer offenen Seite seitlich in die Nut 53 eingeschoben wird. Die Schenkel 55 stehen dabei unter einem Winkel zu dem von der Montageplatte gebildeten Fußteil, der beim Ausführungsbeispiel in der Größenordnung von 30° liegt. Dabei kommt ein hochgebogener Anschlagrand 62 zum Anschlag an dem zugeordneten Kragen 52, und eine entgegen der Aufschiebebewegung erfolgende Rückbewegung wird durch Klemmhaken verhindert, die von den beiden Befestigungsstreifen 59 entgegen der Aufschieberichtung nach unten abstehen.

Die Schenkel 55 mit der an ihnen bzw. ihrem Mittelstück 57 angeordneten Schneide 58 gehen an ihrem unteren Ende einstückig in die Streifen 59 über. Da die ganze Sicherheitseinrichtung 54 aus einem Federblech gestanzt und gebogen ist, wird ähnlich wie beim Ausführungsbeispiel der Fig. 20 bis 22 auf diese Weise eine Federzunge geschaffen, die entweder nach dem Aufschieben einer Kunststoffleitung in die Nut 53 eingesetzt wird oder auch schon vor dem Aufschieben eines Kunststoffrohres. Sie lässt sich beim Aufschieben eines Kunststoffrohres im Sinn des Pfeiles 56 (Fig. 23) ohne weiteres und ohne große Gegenkräfte zur Seite drücken, einer Rückbewegung in der Gegenrichtung allerdings setzt sie Widerstand entgegen, weil sich die Schneide 58 hier in den Außenumfang der Rohrleitung eindrückt.

Es ist ohne weiteres erkennbar, dass der Mittelabschnitt 57 zwischen den beiden Schenkeln 55 von Hand in Richtung des Pfeiles 56 (Fig. 23) gedrückt werden kann, um eine Demontage eines schon aufgeschobenen Rohrleitungsstücks zu bewirken. Die dazu aufzuwendende Kraft ist nicht größer als die Aufschiebekraft. Um zu verhindern, dass bei einer solchen Lösebewegung im Sinn des Pfeiles 56 die Federzunge und insbesondere die Verbindungsstelle zwischen den Schenkeln 55 und den Streifen 59 zu sehr gebogen und dadurch möglicherweise die Grenze der elastischen Verformung überschritten wird, ist noch vorgesehen, dass an dem Abschnitt 57 eine laschenförmige Anschlagzunge 63 herausgebogen wird, die sich an den Kragen 52 anlegt, um eine Überdehnung der elastischen Elemente zu verhindern.

Die Fig. 23 bis 29 zeigen daher eine besonders einfache Anordnung einer Sicherheitseinrichtung, die in einfacher Weise aus Federblech gebildet sein kann, um dann auf ein in bekannter Weise aus Kunststoff hergestelltes Verbindungsstück aufgeschoben zu werden.

## Patentansprüche

1. Verbindungsstück für ein Rohrleitungsnetz, insbesondere für ein Bewässerungssystem für Pflanzen, wobei jeder Anschlussstutzen (26, 28) des Verbindungsstückes mit einer Anordnung zur Sicherung (32) des aufgeschobenen Rohrleitungsendes versehen ist, die aus wenigstens einer den Anschlussstutzen (26,28) außen übergreifenden Schneide (36, 40) besteht, die in Aufschieberichtung des Rohrleitungsendes ausgerichet ist, **dadurch gekennzeichnet, dass** die schneide (36,40) um einen Hebelarm (35) mit einer in der Aufschiebrichtung hinter der Schneide (36,40) liegenden Schwenkachse derart elastisch schwenkbar ist, dass die Schneide (36,40) sich außen elastisch an das Rohrleitungsende anlegt.

2. Verbindungsstück nach Anspruch 1, **dadurch gekennzeichnet, dass** Schneiden (36) und Hebelarme (35) als Formteile ausgebildet und gesondert auf die Anschlussstutzen (18, 19) aufgesetzt sind.

3. Verbindungsstück nach Anspruch 2, **dadurch gekennzeichnet, dass** die Schneiden (36) und die Hebelarme (35) jeweils einen Ringkörper bilden, der auf den Anschlussstutzen (26, 28) aufgeschoben und an diesem formschlüssig gehalten ist.

4. Verbindungsstück nach Anspruch 3, **dadurch gekennzeichnet, dass** der Ringkörper aus zwei gegenüberliegenden Halbringen mit je einer Schneide (36) und schräg zu einer Mittelebene hin verlaufenden Hebelarmen (35) besteht, die in gegenüberliegende um 90° gegenüber den Schneiden (36) versetzte Rastlaschen (34) übergehen, die formschlüssig in Aussparungen (31) der Anschlussstutzen eingreifen.

5. Verbindungsstück nach Ansprüche, **dadurch gekennzeichnet, dass** der Ringkörper (39) aus Federblech gestanzt, mit einer an seinem Innendurchmesser vorgesehenen Sicherungskante (40) federnd außen an der Rohrleitung angreift und mit seinen der Sicherungskante (40) gegenüberliegenden Innenseite (41) an einem Sicherungsvorsprung (42) gehalten ist.

6. Verbindungsstück nach Anspruch 5, **dadurch gekennzeichnet, dass** die Sicherungskante (40) gezackt ausgebildet ist.

7. Verbindungsstück nach Anspruch 5, **dadurch gekennzeichnet, dass** an dem der Sicherungskante (40) gegenüberliegenden Innenumfang des Federblechringes (39) eine Aussparung (41) vorgesehen ist, die an einem hakenförmigen Vorsprung (42) des Verbindungsstückes (37) eingehängt ist.

8. Verbindungsstück nach Anspruch, **dadurch gekennzeichnet, dass** die Schneide (58) und die Hebelarme (55) Teile eines aus Federblech gestanzten Sicherungsbügels (54) sind, der U-förmig ausgebildet und mit seiner offenen Seite in eine Nut (53) an einem Anschlussstutzen (26') einschiebbar ist.

9. Verbindungsstück nach Anspruch 8, **dadurch gekennzeichnet, dass** die Hebelarme unter einem Winkel zu einem Fußteil stehen, das aus zwei im wesentlichen parallelen und an die Nut (53) passenden Streifen (59) und einem diese verbindenden Plattenteil (60)besteht.

10. Verbindungsstück nach Anspruch 9, **dadurch gekennzeichnet, dass** das Plattenteil (60) mit einer zu den Streifen (59) hin gerichteten Ausnehmung (61) in Kreisbogenform versehen ist, deren Radius dem Innenradius der Nut (53) entspricht.

11. Verbindungsstück nach Anspruch 8, **dadurch gekennzeichnet, dass** der Schneide (58) ein Anschlag (63) zugeordnet ist, der von dem die Schneide tragenden Mittelstück (57) in Richtung zu einem Kragen (52) abragt, der die Nut (53) auf der zu dem Sicherungsbügel (54) hin gelegenen Seite begrenzt.

12. Befestigungsanordnung mit wenigstens einem Verbindungsstück nach einem der Ansprüche 1 bis 11, **dadurch gekennzeichnet, dass** Klauen (5, 10) als Befestigungselemente vorgesehen sind, welche zumindest die Anschlussstutzen (26) der Verbindungsstücke formschlüssig übergreifen.

13. Befestigungsanordnung nach Anspruch 12, **dadurch gekennzeichnet, dass** die Verbindungsstücke (18, 19) und die Klauen (5, 10) mit formschlüssig ineinander greifenden Strukturen (24, 25) versehen sind, um eine exakte Positionierung der Verbindungsstücke in den Klauen zu gewährleisten.

14. Befestigungsanordnung nach Anspruch 12, **dadurch gekennzeichnet, dass** die Verbindungsstücke (18, 19) als gerade, mit gegenüberliegenden Anschlussstutzen (26) versehene und als mit T-förmig oder kreuzförmig angeordneten Anschlussstutzen versehene Formstücke ausgebildet sind.

## Claims

1. A connector for a piping system, in particular for an irrigation system for plants, each connecting piece (26, 28) of the connector being provided with an arrangement for securing (32) the pipe end which has been pushed thereon, which arrangement consists of at least one cutting edge (36, 40) engaging over the outside of the connecting piece (26, 28), which cutting edge (36, 40) is directed towards the pipe end to be pushed on, **characterised in that** the cutting edge (36, 40) may be swivelled resiliently about a lever arm (35) with a swivel axis located downstream of the cutting edge (36, 40) in the push-on direction in such a way that the cutting edge (36, 40) rests resiliently on the outside of the pipe end.

2. A connector according to claim 1, **characterised in that** cutting edges (36) and lever arms (35) take the form of shaped articles and are positioned separately on the connecting pieces (18, 19).

3. A connector according to claim 2, **characterised in that** the cutting edges (36) and the lever arms (35) each form an annular body, which is pushed onto the connecting piece (26, 28) and held thereon in form-fitting manner.

4. A connector according to claim 3, **characterised in that** the annular body consists of two mutually opposing half-rings each with a cutting edge (36) and lever arms (35) extending obliquely towards a central plane, which arms (35) develop into mutually opposing latching lugs (34) offset by 90° relative to the cutting edges (36), which latching lugs (34) engage in form-fitting manner in recesses (31) in the connecting pieces.

5. A connector according to claim 3, **characterised in that** the annular body (39) is stamped from spring steel sheet, acts resiliently on the outside of the pipe by means of a securing edge (40) provided on the internal diameter thereof and is held against a securing projection (42) by means of its inner side (41) opposite the securing edge (40) .

6. A connector according to claim 5, **characterised in that** the securing edge (40) is of serrated construction.

7. A connector according to claim 5, **characterised in that** a recess (41) is provided on the internal circumference of the spring steel sheet ring (39) opposite the securing edge (40), which recess (41) is fitted on a hook-shaped projection (42) of the connector (37).

8. A connector according to claim 2, **characterised in that** the cutting edge (58) and the lever arms (55) are parts of a securing clip (54) stamped from spring steel sheet, which clip (54) is of U-shaped construction and may be inserted with its open side into a groove (53) on a connecting piece (26').

9. A connector according to claim 8, **characterised in that** the lever arms are at an angle to a foot part, which consists of two substantially parallel strips (59) fitting in the groove (53) and a plate part (60) connecting them together.

10. A connector according to claim 9, **characterised in that** the plate part (60) is provided with a circular arc-shaped recess (61) directed towards the strips (59), the radius of which recess (61) corresponds to the internal radius of the groove (53).

11. A connector according to claim 8, **characterised in that** the cutting edge (58) is associated with a limit stop (63), which projects from the central part (57) bearing the cutting edge towards a collar (52), which defines the groove (53) on the side facing the securing clip (54).

12. A fastening arrangement having at least one connector according to one of claims 1 to 11, **characterised in that** claws (5, 10) are provided as fastening elements, which engage in form-fitting manner at least over the connecting pieces (26) of the connectors.

13. A fastening arrangement according to claim 12, **characterised in that** the connecting pieces (18, 19) and the claws (5, 10) are provided with structures (24, 25) engaging form-fittingly in one another, in order to ensure precise positioning of the connecting pieces in the claws.

14. A fastening arrangement according to claim 12, **characterised in that** the connecting pieces (18, 19) take the form of straight shaped articles provided with opposing connecting pieces (26) and of shaped articles provided with connecting pieces arranged in the shape of a T or of a cross.

## Revendications

1. Raccord pour un réseau de canalisations, en particulier pour un système d'arrosage pour plantes, sachant que chaque embout (26, 28) du raccord est pourvu d'un dispositif (32) destiné à sécuriser l'extrémité insérée de la canalisation composé d'au moins un élément tranchant (36, 40) chevauchant la surface extérieure de l'embout (26, 28), lequel élément est dirigé dans le sens d'insertion de l'extrémité de la canalisation, **caractérisé en ce que** l'élément tranchant (36, 40) peut pivoter de manière élastique autour d'un bras de levier (35) dont l'axe de pivotement est situé derrière l'élément tranchant (36, 40) dans le sens d'insertion, et ce de telle manière que l'élément tranchant (36, 40) s'appuie élastiquement sur la surface extérieure de l'extrémité de la canalisation.

2. Raccord selon la revendication 1, **caractérisé en ce que** l'élément tranchant (36) et les bras de levier (35) sont conçus sous forme de pièces moulées et placés de manière indépendante sur les embouts (18, 19).

3. Raccord selon la revendication 2, **caractérisé en ce que** l'élément tranchant (36) et les bras de levier (35) forment respectivement un corps annulaire qui est inséré sur l'embout (26, 28) et maintenu sur celui-ci par liaison de forme.

4. Raccord selon la revendication 3, **caractérisé en ce que** le corps annulaire est composé de deux demi-bagues opposées présentant respectivement un élément tranchant (36) et des bras de levier (35), s'étendant de manière inclinée par rapport à un plan médian, qui se terminent en pattes d'arrêt (34) opposées décalées de 90° par rapport à l'élément tranchant (36) et s'engageant par liaison de forme dans des évidements (31) des embouts.

5. Raccord selon la revendication 3, **caractérisé en ce que** le corps annulaire (39) est découpé dans la tôle souple, s'engage, avec un bord de sûreté (40) prévu sur son diamètre intérieur, de manière élastique sur la face extérieure de la canalisation, et est maintenu par sa face interne (41) opposée au bord de sûreté (40) contre une saillie de sûreté (42).

6. Raccord selon la revendication 5, **caractérisé en ce que** le bord de sûreté (40) est formé de manière dentelée.

7. Raccord selon la revendication 5, **caractérisé en ce qu'**est prévu, sur la circonférence intérieure de l'anneau de tôle souple (39) opposée au bord de sûreté (40), un évidement (41) qui est accroché à une saillie (42) en forme de crochet du raccord (37).

8. Raccord selon la revendication 2, **caractérisé en ce que** l'élément tranchant (58) et les bras de levier (55) sont des parties d'un circlip (54) découpé dans de la tôle souple, conçu en forme de U et pouvant être inséré par son côté ouvert dans une rainure (53) sur un embout (26').

9. Raccord selon la revendication 8, **caractérisé en ce que** les bras de levier se trouvent sous un angle par rapport à une partie formant le pied qui est composée de deux bandes (59) essentiellement parallèles adaptées à la rainure (53) et d'un élément en plaque (60) reliant ces deux bandes.

10. Raccord selon la revendication 9, **caractérisé en ce que** l'élément en plaque (60) est pourvu d'un évidement (61) en arc de cercle dirigé vers les bandes (59) et dont le rayon correspond au rayon intérieur de la rainure (53).

11. Raccord selon la revendication 8, **caractérisé en ce qu'**est conjuguée à l'élément tranchant (58) une butée (63) qui dépasse de la pièce médiane (57) portant l'élément tranchant en direction d'un collet (52) qui limite la rainure (53) à la face située en direction du circlip (54).

12. Dispositif de fixation avec au moins un raccord selon une des revendications 1 à 11, **caractérisé en ce que** des pattes (5, 10) sont prévues en tant qu'éléments de fixation, lesquelles s'engagent par complémentarité de forme au moins au-dessus des embouts (26) des raccords.

13. Dispositif de fixation selon la revendication 12, **caractérisé en ce que** les raccords (18, 19) et les pattes (5, 10) sont pourvus de structures (24, 25) s'engageant mutuellement par complémentarité de forme, pour garantir un positionnement exact des raccords dans les pattes.

14. Dispositif de fixation selon la revendication 12, **caractérisé en ce que** les raccords (18, 19) sont conçus sous forme de pièces moulées rectilignes pourvues d'embouts (26) opposés ou sous forme de pièces moulées pourvues d'embouts disposés en T ou en croix.
